# EUROPEAN PATENT APPLICATION

(11) **EP 1 095 750 A1**
(43) Date of publication of application: **02.05.2001**
(21) Application number: 99830682.3
(22) Date of filing: 29.10.1999
(51) Int. Cl.: B28D 1/04, B23D 47/00

(54) **An improved tool for cutting stone blocks or the like and a process for obtaining the tool**

(71) Applicant: Veronesi S.r.l., 37020 Cerro Veronese (VR) (IT)
(72) Inventor: Veronesi, Llario, 37020 Cerro Veronese (VR) (IT)
(74) Representative: Gotra, Stefano

(57) **Abstract**

The tool of the invention comprises a plurality of discs (3) mounted parallel and solidly on a rotating support (4), with the discs (3) spaced one from another and thus defining spaces (5) between them in which, before each cutting operation, a material (5a) is injected. The material is soft enough to be scratched away and removed following friction contact against the stone block (2). The process of the invention includes, before each cutting operation, an injection stage in which a polyurethane foam (5a) is injected into the spaces (5) in a fluid state, and a rapid-hardening stage in which the foam dries and hardens to create a single body comprising the discs and the foam.

## Description

The invention relates to an improved tool for cutting stone slabs or the like and a process for making the tool. In particular, reference is made to tools destined for use in cutting natural stones such as marble and granite. During the following description reference will be made, for the sake of simplicity, to marble and granite, although it should be borne in mind that this is not intended as a limitation to the scope of use of the tool.

In order to obtain strips/sheets of granite and marble of various thicknesses and heights from blocks, for some time now machines have been used which are equipped with disc packs separated by flanges (the thickness of the flanges determines the final thickness of the strips). Discs and flanges form a pack assembly together with a shaft which turns the discs; the flanges block the discs for a diameter corresponding to about 1/3 of the diameter of the discs themselves, leaving the discs free to penetrate the block of stone to be cut to a depth of about 1/3 of the disc diameter. The whole assembly is mounted on a carriage which slides back and forth on a special bridge.

The cut is performed as a consequence of the abrasion (removal) effected by the diamond cutter edge (or segments) welded or in any case fixed on to the circumference of the discs, which revolve at very high speeds. The carriage bearing the discs moves back and forth while forcing the discs into the block being cut.

In the case of granite the removal at each stroke (full movement of the carriage either back or forth) is limited by many factors to a few tenths of mm; for this reason more discs have been employed, located side-by-side, to make more than one cut simultaneously and therefore obtain more than one cut strip at a time. This obviously leads to greater productivity. When the number of strokes necessary to reach the bottom of the programmed cut has been carried out (the number of strokes depends on the depth, the hardness of the material being cut, the degree of diamond cutter wear), the bridge bearing the carriage is raised into the original position and displaced laterally by a distance equal to the breadth of the disc pack assembly, so as to be ready for a new cutting operation. In the ease of marble, for which one disc only is normally used since one stroke is enough to complete a full cut, some use of the disc assembly technology has been made because the technique enables vertical cuts to be made without the need for an operator. At the end of the vertical cutting operation, the bridge is newly raised and a special horizontal disc makes the horizontal cuts so that the finished strips can be removed from the block

Owing to their conformation and their operating modes, these tools have operative limits which are direct consequences of the need to make them as thin as possible in order to limit to a minimum the waste created during the cut. The percentage of material removed during the cut and subsequent squaring and shaping of the cut strips to correct problems of planarity connected with the cutting operation result in about a 40% loss of material, which can be even higher.

The need to use slim discs has an effect on their rigidity, increasing their tendency to elastic deformation, with the possible consequences of deviation, and their tendency to vibrate, leading to loud cutting noise and greater wear of the diamond coating on their circumference.

For special jobs, such as cutting large slabs of stone, there are machines which cut with a single large-diameter disc (3500 mm. and above). In order to keep them rigid and vibration-absorbent and in general suitable for their chosen task, these discs will have to be of an adequate breadth.

In the final analysis, high disc breadth inevitably means: greater power absorption, greater quantities of material lost in the cut, larger consumption of diamond coating; on the other hand, thin discs result in greater cut deviation, greater vibration, disc diameter limitation and therefore smaller cut depth.

The main aim of the present invention is to limit all of the above-mentioned drawbacks by providing a tool which is able to withstand deviation pressures and vibrations while providing discs or blades of a contained breadth or a larger diameter with respect to known tools.

A further aim of the present invention is to provide a tool which can be used by present machines for cutting stone materials and the like.

An advantage of the invention is that it provides a tool able simultaneously to cut slabs of a smaller breadth or greater height with respect to existing tools. A further advantage of the invention is that it considerably lowers the vibrations of the discs, with a consequent drastic reduction in tool operating noise levels, while at the same time delivering a much better cut precision.

These aims and advantages and more besides are all attained by the invention as it is characterised in the appended claims.

Further characteristics and advantages of the present invention will better emerge from the detailed description that follows, of a preferred but not exclusive embodiment thereof, illustrated purely by way of example in the accompanying figures of the drawings, in which:

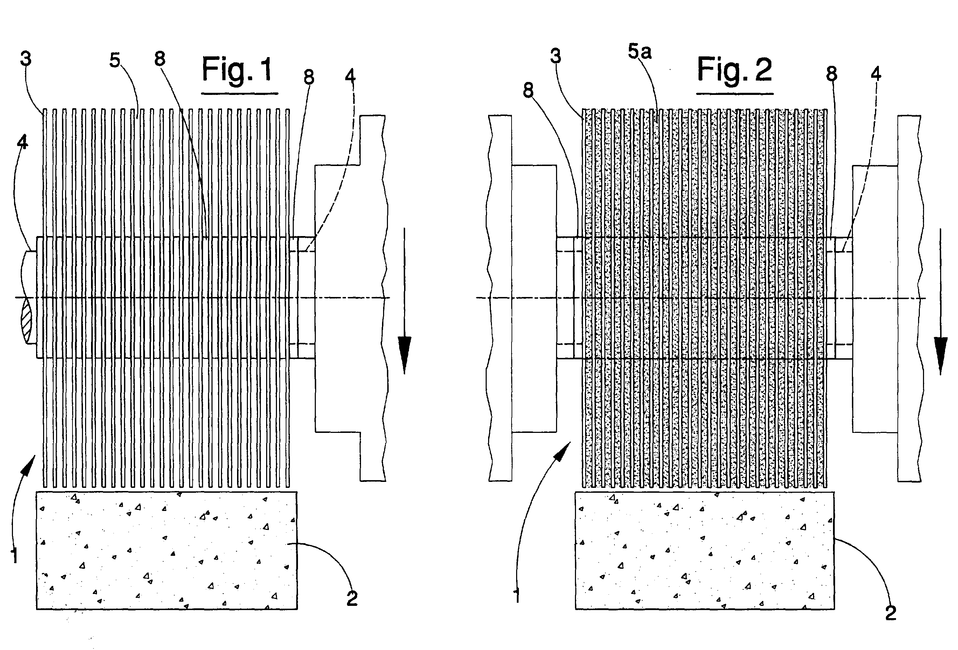

figure 1 is a schematic frontal view of a known tool for cutting stone blocks;
figure 2 is a schematic frontal view of the tool of the invention for cutting stone blocks;
figures 3 and 4 show a schematic section of two successive cutting stages made by the tool of the invention.

The tool 1 comprises a plurality of discs 3 which are assembled parallel and solidly on a rotating support 4 and which are separated one from another by flanges 8. In the figures of the drawings the rotating support 4 is represented by a rotary shaft with which the discs rotate solidly. The rotating support 4 could, however, be of a different nature, for example a shaft provided with circular-section blades, oscillating with predetermined oscillations about a position of equilibrium, or any other support used in machines for cutting stone materials, for moving discs or cutting blades.

In normal slab-cutting operations the tool 1 is provided, apart from with rotary motion, with an alternating horizontal motion (cutting stroke) and a relative translating motion (breadth of cutting stroke) in a radial direction with respect to the block 2.

The discs 3 are, as with other known tools, spaced one from another by flanges 8 which, apart from blocking the discs, define spaces 5 whose thickness determines the thickness of the sheets 6 to be cut. The thickness of the discs determines, obviously, the thickness of the cuts between one sheet and another. In the present invention, in the spaces 5 existing between the discs 3 a material 5a is inserted, which is of a hardness which is easily worn away and removed by the friction created when the tool is brought into contact with the stone slab to be cut. In particular the material 5a completely fills the space 5 and is of a type which remains stuck to the sides of the discs 3 even during the cutting stage. In this way a compact sandwich structure is obtained for the tool.

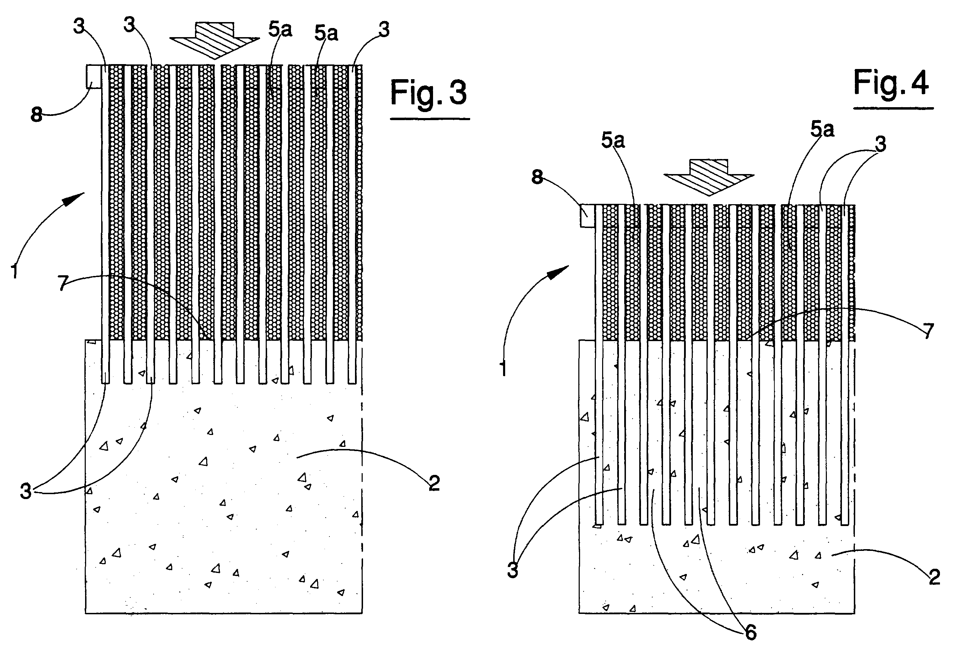

The tool retains its compact structure over all the breadth 1a defined by the part of the radius of the discs which has not yet penetrated into the material to be cut, the height of which, as can be seen from figures 3 and 4, is variable according to the cutting stage; thanks to this compactness vibrations and all other undesired movement are prevented.

As the cutting system involves a series of cutting strokes in order for the desired depth of cut to be achieved, at which point the discs at the end are freed, the material 5a is inserted before the beginning of each cutting operation in order that at the start of each cutting operation the tool is once more made compact, with the spaces 5 filled with material 5a. To give better application the material 5a is preferably of a pasty texture, and might be, for example, clayey or mixtures of that nature, or a synthetic material which solidifies once settled in the spaces.

Satisfactory results have been obtained by injecting a polyurethane foam (in the fluid state) into the spaces and solidifying it (after expansion) internally of the spaces so as to create a single body with the discs 3 and the material 5a. The polyurethane foam injection phase is performed while the discs 3 are still, or rotating slowly, and in any case not while the discs are engaged in a cutting operation on the block of material to be cut.

Once the material has solidified, the disc assembly is brought up to normal working speed, which causes no problems to the solidified foam, and the cutting stage can begin. Polyurethane foam has the advantage of being easily injectable in the fluid state, and rapidly solidifies; obviously the fluidity of the material and the time needed for the expansion depend on the chemical characteristics which are chosen for the material; however, the properties of the various possible materials are well-known as they are in use in various sectors of technology.

The foam material is very light and has no significant effect on the rotary motion of the tool. The material is also advantageous in that once solidified it is quite resistant to traction and compression while being sufficiently elastic to absorb vibrations.

The important fact is that the material wears easily and rapidly on friction against the marble or stone, and does not crumble and jam between the discs but adheres until removed as an effect of contact against the marble or stone. This quality of adherence to the discs is important also inasmuch as the material does not suffer the effects of centrifugal force, which would whip it outwards following tool rotation.

To enhance the adherence, or to anchor the material solidly to the tool, the discs can be equipped with rough or milled or holed lateral surfaces.

It is worth noting that the insertion of the material 5a into the spaces 5 between the discs can be done in one of several ways, with respect to the method described, according to the nature of the material to be inserted between the blades. For example, spreading systems could be used, or methods based on pressure, polymerisation,, and so on. This operation is performed with the tool mounted on the cutting machine before the cutting stage. It is of no importance if some of the material finishes on the actual cutting edge of the blades, since it will be removed as soon as the cutting operation begins.

In cutting machines where cutting tools can be rapidly changed, the tool could be prepared when dismounted and could be used to substitute the previous tool, which, having completed a cut could be removed for re-preparation.

The tools which are object of the present invention derive from known tools (apart from the possibility of increasing disc diameter or reducing disc breadth, as will be described herein below), with the addition of a suitable material, as described above, in the spaces between the discs. There is therefore no need to describe further the tool and disc construction as it is done, apart from the insertion of the material 5a, in exactly the same way as for known tools.

Tool operation is as follows.

Once the tool has been prepared as indicated above, it is set in rotation and brought into contact with the marble or stone to be cut, as with normal tools. As the discs (or rather, their cutting edges) attack the stone and begin to cut, the material 5a in the spaces 5 immediately wears on contact with the stone, or more precisely the upper surface of the slab being cut. The material in no way hinders the cutting operation and therefore the advance of the tool into the block of stone. The material 5a significantly reduces both disc vibration and disc elastic deformation, including undulations, bends, curving, etc., effect which are well known in existing tools having large diameters and small breadths. The discs are, in effect, contained withing a compact block which prevents or at least greatly limits any movement of a single disc. This effect is maintained also during the cutting stage, as the discs are all through the operation effectively closed in a "block" (as can be easily seen in figures 3 and 4) which limits undesired movements.

In this way tools can be used which have a disc breadth that is lower than those normally in use, with considerably less waste of material and with faster cutting times. Also, greater-diameter discs can be used (with respect to normal tools) and therefore thicker slabs can be cut.

The minimum thickness of the slabs can be smaller than possible with known tools since the absence of undesired disc movement makes the cut much more precise, while also considerably limiting the possibility of sideways movements which could result in a breakage of the slab during the cutting stage.

## Claims

1. An improved tool (1) for cutting marble or stone blocks (2), comprising a plurality of discs (3) mounted parallel and solidly on a rotating support (4), the discs (3) being spaced one from another in such a way as to define spaces (5), a breadth of which spaces (5) determines a breadth of slabs (6) to be cut from the block, characterised in that before each cutting operation a material (5a) is inserted into the spaces (5) between the discs (3), which material (5a) fills an entire breadth of the spaces (5) and is of a degree of hardness such that when rubbed against a surface of the block (2) it is easily broken down by friction and removed.

2. The tool of claim 1, characterised in that the material (5a) is adhesive and sticks to sides of the discs (3).

3. The tool of claim 1, characterised in that the material (5a) completely fills the spaces (5).

4. The tool of claim 1, characterised in that the material (5a) is of a type which stays adherent to sides of the discs (3) in a part of the sides which is not inserted in the block (2) being cut, even when an external surface of the material (5a) is in the act of being rubbed away by friction against the block (2).

5. The tool of claim 1, characterised in that the material (5a) is polyurethane foam.

6. The tool of claim 1, characterised in that surfaces of the sides of the discs (3) are rough, or are milled, or are holed.

7. A process for making the tool of claim 1, characterised in that before each cutting operation there takes place a stage in which a fluid-state polyurethane foam is injected into the spaces (5) between the discs (3); followed by a phase in which the polyurethane hardens and creates a single body comprising the polyurethane and the discs (3).

8. The process of claim 7, characterised in that the stage of polyurethane foam injection is carried out with the discs (3) either still or in slow rotation.
